Europäisches Patentamt

European Patent Office

Office européen des brevets

(11) Publication number: **0 215 585**
**B1**

# (12) EUROPEAN PATENT SPECIFICATION

(45) Date of publication of the patent specification:
**18.10.89**

(51) Int. Cl.⁴: **B04B 11/04**

(21) Application number: **86306417.6**

(22) Date of filing: **19.08.86**

(54) Bearing lubricating device in a centrifugal separator.

(30) Priority: **05.09.85 SE 8504132**

(43) Date of publication of application:
**25.03.87 Bulletin 87/13**

(45) Publication of the grant of the patent:
**18.10.89 Bulletin 89/42**

(84) Designated Contracting States:
**DE FR IT NL SE**

(56) References cited:
**SE-C- 61 975**
**SE-C- 70 326**

(73) Proprietor: **ALFA-LAVAL SEPARATION AB, Box 500,
S-147 00 Tumba(SE)**

(72) Inventor: **Stroucken, Klaus, Tallsatravagen 12,
S-144 00 Ronninge(SE)**

(74) Representative: **Simpson, Ronald Duncan Innes et al,
A.A.Thornton & Co. Northumberland
House 303-306 High Holborn, London WCIV 7LE(GB)**

## Description

The present invention relates to a centrifugal separator of the kind comprising a centrifuge rotor, a vertical drive shaft that supports the centrifuge rotor, a casing which surrounds part of the drive shaft and supports at least one bearing for the drive shaft within a space in the casing, and driving means arranged in engagement with the drive shaft outside the casing.

For lubricating the drive shaft shaft bearing in centrifugal separators with a vertical drive shaft different method are practised.

If the drive shaft has a gear transmission for its driving, the gear transmission is enclosed in the same casing as the bearing, the latter being lubricated by so-called splash lubrication as a consequence of agitation of oil accomplished by the gears of the gear transmission (SE-C 61 975).

If the drive shaft instead has a belt transmission for its driving, it is common that the rotation of the drive shaft is utilized for the operation of a pump, for instance of the centrifugal or centripetal type, and that the oil is pumped by means of this pump through channels to a casing in which said bearing is enclosed.

It is known that a bearing of the kind here in question requires a relatively small amount of lubricating oil to be supplied per unit of time in order to function satisfactorily. If too much lubricating oil is supplied to the bearing, it has been observed that too much friction and too high a bearing temperature arise. This problem increases with increasing rotational speeds for the drive shaft.

Hitherto known methods of lubricating the drive shaft bearing have proved difficult to adapt to a requirement for a very small but continuous flow of lubricating oil to the drive shaft bearing. In connection with splash lubrication it is difficult to accomplish a sufficiently limited agitation of the oil. The design of the gears of the gear transmission has to be adapted in the first place to their transmission function and, furthermore, the gears themselves require a very intensive lubrication by large amounts of oil. For these reasons the drive shaft bearing often has to be shielded from direct splash lubrication by means of deflection members and the like. It is difficult or impossible by such means to accomplish a reliable optimum lubrication of the bearing, if it is to be charged with only a small amount of lubricating oil per unit of time.

If, instead, a pump is used to pump lubricating oil from a container through a channel to the drive shaft bearing, the channel has to be throttled so heavily, to limit the oil flow therethrough, that there will be a risk of clogging of the channel. Therefore, it is often necessary to accept a larger oil flow than desirable through the channel and, by means of deflection means or the like, to arrange a distribution of the oil flowing out of the channel, before the oil hits the bearing. Consequently, even in this case it is difficult to accomplish a reliable optimum lubrication of the bearing.

The object of the present invention is to provide a device for lubricating the drive shaft bearing in a centrifugal separator of the initially described kind, which device is simple and reliable, and also readily can be adapted to a desired degree of lubrication of the drive shaft bearing.

This object can be achieved according to the invention by providing the centrifugal separator with: means within the casing forming an upwardly open basin for containing a pool of lubricating oil; a rotatable member rotatably driven by the drive shaft and extending downwardly into the pool of oil in order to create during rotation of the drive shaft an oil mist within the said space in the casing; and sealing means arranged around the drive shaft for preventing oil mist from passing along the drive shaft out of the casing.

With this arrangement, the member extending down into the pool of oil may be given any suitable form resulting in a desired degree of oil mist generation within the casing. Thus, the design of this member is not at all influenced by the design of the means for driving of the drive shaft.

In a preferred embodiment of the invention, the said basin extends around the drive shaft, and the said member is mounted on the shaft.

It has, surprisingly, proved that an oil mist generating member designed as a right-circular cylindrical sleeve, without any wings or other protruding members, may accomplish an entirely satisfactory lubrication of the drive shaft even at very high rotational speeds for the drive shaft, for instance in the order of 8,000rpm. Apparently a member of this design will generate a fine oil mist which supplies the drive shaft bearing with an optimum amount of lubricant per unit of time.

Trials in connection with the invention have led to an understanding that the drive shaft bearing here in question requires a far smaller amount of lubricating oil to be supplied per unit of time than has been common before. Thus, the invention has also led to the result that the drive shaft bearing can be subjected to substantially larger loads than hitherto without any substantial increase of the bearing temperature arising.

The invention is particularly suitable in connection with belt driving of the drive shaft, since in this connection it facilitates a very simple and inexpensive equipment for the lubrication of the drive shaft bearing in comparison with what can be obtained by means of previously known techniques.

Especially in connection with belt driving of the drive shaft, it is common that the drive shaft extends through the whole space within the casing for the drive shaft bearing, i.e. extends through an upper and a lower opening in the casing. The invention makes it possible to accomplish a fully satisfactory lubrication of the drive shaft bearing by means of only a very small amount of lubricating oil in site within the casing. A prerequisite for this is, however, that the oil can be retained within the casing, i.e. that the above mentioned sealing means round the drive shaft is effective.

In this connection, it is not necessary to use mechanical sealing members, i.e. members arranged to seal by contact against both the drive shaft and the casing for the drive shaft bearing. Instead, so-called labyrinth sealing members are used. According to a further preferred feature of the invention, the member extending down into the pool of oil is formed in such a way that it forms together with the lubricating oil in the basin a liquid seal, which extends around the drive shaft and prevents free air communication between the space within the casing and the surrounding of the casing through said lower opening in the casing. Hereby an effective obstacle is provided against the flow of air straight through the whole space within the casing, i.e. through both of the openings of the casing intended for the drive shaft, which flow of air could otherwise entrain oil mist out of said space.

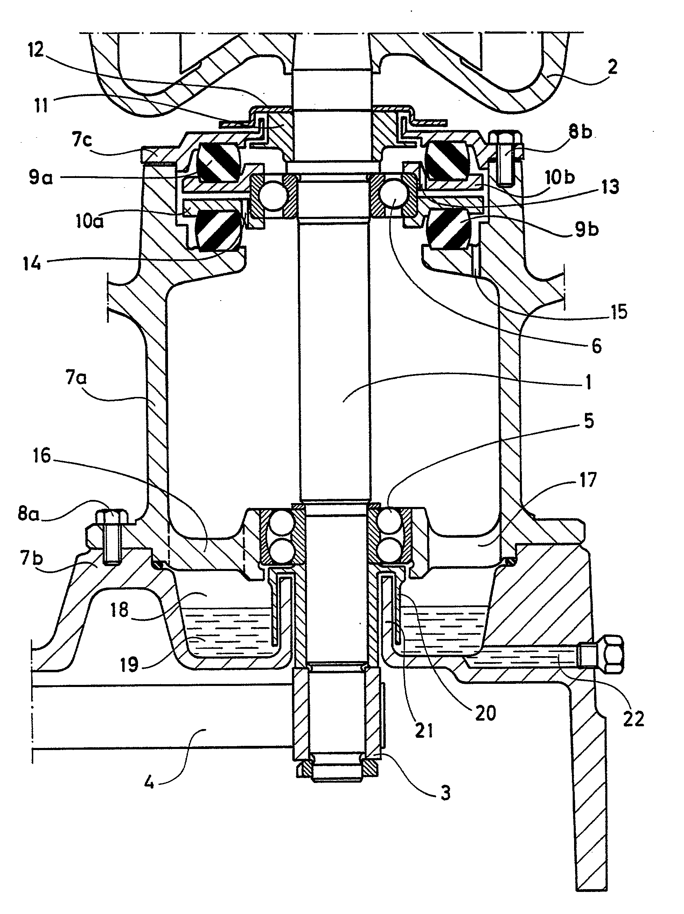

The invention is further described in the following with reference to the accompanying drawing. In the drawing there is shown a device for lubricating two different bearings for the drive shaft of a centrifugal separator.

In the drawing there is shown a vertical shaft 1 which supports at its upper end a centrifuge rotor 2 and at its lower end a sleeve 3. Around the sleeve 3 there is arranged a drive belt 4 for the rotation of the shaft 1.

The shaft 1 is journalled in two bearings 5 and 6, which are supported by a frame comprising among other things three frame parts 7a, 7b and 7c. The frame parts being connected with each other by means of bolts 8a and 8b, form together a casing surrounding the bearings 5 and 6. The reference numerals 9a, 9b and 10a, 10b concern members by means of which the upper bearing 6 is resiliently suspended in the frame parts 7a and 7c.

Above the upper bearing 6 the shaft 1 supports a sealing member 11 which in turn supports a circular cap 12. The sealing member 11, the frame part 7c and the rotatable cap 12 are arranged to form a labyrinth seal between the interior of the frame parts 7a-c and the space above the frame parts surrounding the centrifuge rotor 2.

On the lower surface of the sealing member 11, or on the shaft 1 in this area there may be mounted a number of radially extending wings (not shown), which during rotation of the shaft will create a fan action and thereby effect a transportation of air up through the bearing 6 from the space within the frame part 7a.

The members 10a and 10b with which the stationary outer bearing ring of the bearing 6 is connected have channels 13 and 14 connecting the space above the members 10a, 10b with the space below the same. The reference numeral 15 concerns a further channel connecting a space around the members 10a, 10b with the space below the bearing 6. The stationary outer bearing ring of the lower bearing 5 is supported by a partition 16 in the frame, which has several relatively large through-holes 17. Below the partition 16 the frame part 7b forms an annular basin 18 surrounding the shaft 1. The basin 18 contains a pool of lubricating oil 19.

Supported by the shaft 1 immediately below the bearing 5 a sleeve member 20 extends down into the oil 19 in the basin 18. That part of the sleeve formed member 20 extending down into the oil is formed as a right-circular cylinder. A narrow slot is left between this circular cylindrical part of the member 20 and a sleeve shaped inner wall 21 of the basin 18. The member 20 forms together with the oil 19 in the basin 18 a liquid seal around the shaft 1, which prevents free communication between the interior of the casing and the surrounding of the casing through the central opening formed by the wall 21.

The reference numeral 22 indicates a channel through the frame part 7b for filling or draining of oil.

The above described device operates in the following manner.

Upon rotation of the shaft 1 by means of the drive belt 4 the sleeve member 20 is entrained in the rotation. By the movement of the member 20 in the oil 19 in the basin 18 there will be generated a very fine oil mist in the space formed by the frame parts 7a-c. The oil mist is distributed within this space and deposits oil in a finely divided form on, among other things, the bearings 5 and 6.

Oil having passed through the bearing 6 and been deposited on the frame part 7c may run back to the basin 18 through the channels 13, 14 and 15.

The sleeve member 20 will usually have the form of a body of revolution, and as mentioned is preferably of right-circular cylindrical form. The axial extension thereof, like the design of possible protruding members on its outside, may be varied according to need for the creation of exactly the desired degree of oil mist generation above the basin 18. Adaptation of the design of the member 20 may come into question with reference to various factors, such as the intended rotational speed of the shaft 1 and the chosen quality of the lubricating oil. Of course also the oil level in the basin 18 may be varied.

None of these measures for the provision of an optimum lubrication of the drive shaft bearings would influence the rest of the operation of the shaft. The member 20 is easily available for possible modification, since it is only necessary to remove the centrifuge rotor from the shaft 1 and to loosen the bolts 8b, after which the shaft 1 may be lifted up together with the bearing 5, the member 20 and the sleeve 3.

It has been mentioned above that special wings could be arranged above the bearing 6 for the creation of an air circulation therethrough. Such wings are previously known, for example, in connection with conventional splash lubrication of this bearing. The present invention has proved that in certain cases it is possible to dispense with such wings.

**Claims**

1. Centrifugal separator comprising a centrifuge rotor, a vertical drive shaft supporting the centrifuge rotor (2), a casing which surrounds the drive shaft and supports at least one bearing for the drive shaft in a space within the casing, and driving means arranged in engagement with the drive shaft outside the casing, characterized by:
   - means within the casing (7a - c) forming an upwardly open basin (18) for containing a pool of lubricating oil (19);
   - a rotatable member (20) rotatably driven by the drive shaft (1) and extending downwardly into the pool of oil (19) in order to create during rotation of the drive shaft an oil mist within said space in the casing (7a - c); and

– sealing means arranged around the drive shaft (1) for preventing oil mist from passing along the drive shaft (1) out of the casing (7a - c).

2. Centrifugal separator according to claim 1, characterized in that said basin (18) extends around the drive shaft (1) and that the member (20) is mounted on the shaft (1).

3. Centrifugal separator according to claim 2, characterized in that said member (20) is in the form of a body of revolution.

4. Centrifugal separator according to claim 3, characterized in that said member (20) has the form of a right-circular cylindrical sleeve.

5. Centrifugal separator according to claim 2, in which the drive shaft extends through the space in the casing and through an upper and a lower opening in the casing, characterized in that said member (20) is connected with the drive shaft (1) and that it forms together with the lubricating oil (19) in the basin a liquid seal which extends around the drive shaft and prevents free air communication between the space within the casing (7a - c) and the surrounding of the casing through the lower opening of the casing.

6. Centrifugal separator according to claim 1, characterized in that the bottom (7b) of the casing is shaped to form the said basin (18).

## Patentansprüche

1. Zentrifugalseparator mit einem Zentrifugenrotor, einer den Zentrifugenrotor (2) tragenden vertikalen Antriebswelle, einem die Antriebswelle umgebenden Gehäuse, das mindestens ein Lager für die Antriebswelle in einem Raum innerhalb des Gehäuses trägt, und einem außerhalb des Gehäuses mit der Antriebswelle gekoppelt angeordneten Antrieb, gekennzeichnet durch

– eine Einrichtung innerhalb des Gehäuses (7a–c), die einen nach oben offenen Behälter (18) zur Aufnahm eines Schmierölbestandes bildet,

– ein drehbares Element (20), das von der Antriebswells (1) drehangetrieben wird und abwärts in den Ölbestand (19) hinein vorsteht, um bei der Drehung der Antriebswelle im dem Raum innerhalb des Gehäuses (7a–c) einen Ölnebel zu erzeugen, und

– eine um die Antriebswelle (1) herum angeordnete Dichtanordnung, die verhindert, daß Ölnebel entlang der Antriebswelle (1) aus dem Gehäuse (7a–c) entweicht.

2. Zentrifugalseparator nach Anspruch 1, dadurch gekennzeichnet, daß der Behälter (18) um die Antriebswelle (1) herumverläuft und das Element (20) auf der Welle (1) gelagert ist.

3. Zentrifugalseparator nach Anspruch 2, dadurch gekennzeichnet, daß das Element (20) in Form eines Rotationskörpers vorliegt.

4. Zentrifugalseparator nach Anspruch 3, dadurch gekennzeichnet, daß das Element (20) die Form einer rechtwinklig kreiszylindrischen Hülse hat.

5. Zentrifugalseparator nach Anspruch 2, bei der die Antriebswelle durch den Raum sowie durch eine obere und eine untere Öffnung im Gehäuse verläuft, dadurch gekennzeichnet, daß das Element (20) mit der Antriebswelle (1) verbunden ist und zusammen mit dem Schmieröl (19) im Behälter eine Flüssigkeitsdichtung bildet, die sich um die Antriebswelle herum erstreckt und eine freie Luftverbindung zwischen dem Raum im Gehäuse (7a–c) und der Umgebung des Gehäuses durch die untere Öffnung des Gehäuses verhindert.

6. Zentrifugalseparator nach Anspruch 1, dadurch gekennzeichnet, daß der Boden (7b) des Gehäuses so gestaltet ist, daß er den Behälter (18) ausbildet.

## Revendications

1. Séparateur centrifuge comprenant un rotor centrifuge, un arbre d'entraînement vertical supportant le rotor centrifuge (2), un carter qui entoure l'arbre d'entraînement et supporte au moins un palier pour l'arbre d'entraînement dans un espace situé dans le carter, et des moyens d'entraînement agencés pour venir en engagement avec l'arbre d'entraînement à l'extérieur du carter, caractérisé par:

– des moyens dans le carter (7a–c) formant un bassin ouvert vers le haut (18) pour contenir une certaine quantité d'huile de lubrification (19);

– un organe rotatif (20) entraîné en rotation par l'arbre d'entraînement (1) et s'étendant vers le bas dans la masse d'huile (19) de manière à créer pendant la rotation de l'arbre d'entraînement un brouillard d'huile dans ledit espace situé dans le carter (7a–c); et des moyens de fermeture étanche disposés autour de l'arbre d'entraînement (1) pour éviter que le brouillard d'huile passe le long de l'arbre d'entraînement (1) et sorte du carter (7a–c).

2. Séparateur centrifuge selon la revendication 1, caractérisé en ce que ledit bassin (18) s'étend autour de l'arbre d'entraînement (1) et en ce que l'organe (20) est monté sur l'arbre (1).

3. Séparateur centrifuge selon la revendication 2, caractérisé en ce que ledit organe (20) à la forme d'un corps de révolution.

4. Séparateur centrifuge selon la revendication 3, caractérisé en ce que ledit organe (20) à la forme d'un manchon cylindrique droit et circulaire.

5. Séparateur centrifuge selon la revendication 2, dans lequel l'arbre d'entraînement s'étend dans l'espace à l'intérieur du carter et à travers une ouverture supérieure et une ouverture inférieure du carter, caractérisé en ce que ledit organe (20) est relié à l'arbre d'entraînement (1) et en ce qu'il forme avec l'huile de lubrification (19) contenue dans le bassin un joint liquide qui s'étend autour de l'arbre d'entraînement et empêche la communication avec l'air libre entre l'espace situé dans le carter (7a–c) et l'environnement du carter en passant par l'ouverture inférieure du carter.

6. Séparateur centrifuge selon la revendication 1, caractérisé en ce que le fond (7b) du carter est conformé à la forme dudit bassin (18).